(19) Europäisches Patentamt
European Patent Office
Office européen des brevets

(11) Publication number: 0 092 023
B1

(12) # EUROPEAN PATENT SPECIFICATION

(45) Date of publication of patent specification: 30.07.86

(51) Int. Cl.$^4$: B 01 D 53/36, B 01 J 23/84, B 01 J 23/88, B 01 J 23/89

(21) Application number: 83100837.0

(22) Date of filing: 28.01.83

(54) **Use of a catalyst for cleaning exhaust gas particulates.**

(30) Priority: 21.04.82 JP 65376/82
02.11.82 JP 191779/82

(43) Date of publication of application:
26.10.83 Bulletin 83/43

(45) Publication of the grant of the patent:
30.07.86 Bulletin 86/31

(84) Designated Contracting States:
DE FR GB

(56) References cited:
GB-A-1 058 706
GB-A-1 068 186
GB-A-1 183 079
GB-A-1 438 806
US-A-3 438 721
US-A-3 849 336
US-A-4 279 777
US-A-4 298 354
US-A-4 304 658

(73) Proprietor: BRIDGESTONE TIRE COMPANY LIMITED
10-1, Kyobashi 1-Chome Chuo-Ku
Tokyo (JP)

(72) Inventor: Watabe, Yoji
No. 1296-74, Katakura-cho
Hachioji-shi Tokyo (JP)
Inventor: Yamada, Chikara
No. 1-5, Fujimi-cho
Higashimurayama-shi Tokyo (JP)
Inventor: Irako, Koichi
No. 4-25-3, Tamako-cho
Higashimurayama-shi Tokyo (JP)
Inventor: Murakami, Yuichi
No. 3-501, Umegaoka Tenpaku-ku
Nagoya-shi Aichi Prefecture (JP)

(74) Representative: Patentanwälte TER MEER - MÜLLER - STEINMEISTER
Mauerkircherstrasse 45
D-8000 München 80 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 092 023 B1

Courier Press, Leamington Spa, England.

**Description**

Background of the invention

1. Field of the invention

This invention relates to the use of a catalyst for cleaning particulates in exhaust gases, typically diesel engine exhaust gases, and more particularly, to the use of a catalyst with improved heat resistance which is carried on a particulate trap such that when particulate-containing exhaust gases are admitted into the particulate trap and the particulates are trapped by the particulate trap, the catalyst allows the trapped particulates to be burned at relatively low temperatures.

2. Prior art

Recently, it became evident that particulates in exhaust gases, especially particulates (minute particles of carbon such as soot) in diesel engine exhaust gases contain carcinogenic agents such as benzpyrene. Since such particulate-containing exhaust gases create a pollution problem, regulations on the emission of such exhaust gases are being scheduled.

To trap or collect such particulates, the prior art practice is to use heat-resistant traps including ceramic honeycombs, ceramic foams, ceramic fibers, metallic mesh loaded systems, and pellet carrier loaded systems (for example, alumina pellets). Although these traps can effectively trap or collect particulates, they tend to be clogged with accumulated particulates. It is necessary to periodically remove accumulated particulates by disposal or combustion at elevated temperatures.

The disposal of accumulated particulates, which may be carried out by blowing or washing, is troublesome to carry out and difficult to fully remove the accumulated particulates, and will create secondary pollution. The combustion of accumulated particulates may be carried out by means of a burner, but requires an elevated temperature as high as 700°C. In addition, combustion as such imparts an undesirable thermal shock to the trap itself to promote the deterioration thereof. An additional risk is the evolution of harmful gases such as carbon monoxide due to incomplete combustion. There is the need for a technique capable of effectively burning particulates accumulated on a particulate trap or cleaner at a relatively low temperature.

This invention is directed to the use of a catalyst which allows particulates on a trap to be burned at a sufficiently low temperature to provide no thermal shock to the trap itself.

A number of catalysts, particularly those based on precious metals such as platinum and palladium are well known in the art for the conversion of gaseous harmful substances such as $NO_x$, carbon monoxide and hydrocarbons in gasoline engine exhaust gases into harmless substances through catalytic oxidation. Such catalysts, however, act in a completely different way from the particulate cleaning catalysts according to the present invention. For example, the platinum catalyst which is known to be the best catalyst for cleaning gasoline engine exhaust gases was found to fail in effectively burning particulates. As another example, catalytic structures for the treatment of exhaust gases from internal combustion engines to reduce or substantially remove the combustible compounds in said exhaust gases are known from GB—A—1058706.

This reference discloses a catalytic structure comprising a substrate, an adherent film of alumina formed on said substrate by contacting said substrate with a solution of an alkali metal aluminate and calcining said alumina hydrate to alumina and adding a catalyst material which is a lead reactive catalyst, an oxidation catalyst or a combination thereof. As an oxidation catalyst vanadium pentoxide, copper chromite or a complex of copper oxide and copper chromite may be used.

Though it is known that particulates in exhaust gases are largely composed of carbon, no catalyst has been found in the prior art which enables the effective catalytic combustion of such carbon particulates in low temperature.

Summary of the invention

The present invention provides a use of a catalyst system which allows minute carbon particles such as soot on a trap to be effectively burned at relatively low temperatures. According to a first aspect of the invention, the above and other objects are achievable by a catalyst comprising in combination, (a) at least one component selected from the group consisting of metallic copper and copper chloride, copper nitrate and copper oxide; (b) at least one component selected from metallic molybdenum, metallic vanadium, and ammonium salts, chlorides and oxides of molybdenum and vanadium; and (c) at least one component selected from alkali metal compounds. It is mentioned that US—A—4 298 354 describes an alcohol mixture suitable for combining with gasoline and a method for its manufacture, which comprises contacting a gaseous reactant containing carbon monoxide and hydrogen with an oxide complex catalyst, corresponding to the formula

$$Cu_aThM_bA_cO_x,$$

wherein

M is one or more of Ca, Mo, Rh, Mn, Pt, Ce, Cr, Zn, Al, Ti, La, V, U, Ru, Re and Pd,

A is an alkali metal, a is 0.5 to 2.5, b is 0.01 to 1.0, c is 0.05 to 0.9, and

x is a number such that the valence requirements of the other elements for oxygen is satisfied.

From the above formula of the catalyst described in this reference, it can be taken that the catalyst used must comprise thorium as a necessary component. Since the catalyst used according to the present invention does not comprise this element, there is a clear difference between the catalysts used. On the other hand this reference does not disclose or make obvious that the catalyst therein described or a similar catalyst having the composition of the catalyst used according to the present invention might be usable for cleaning minute particles of carbon such as soot from exhaust gases. According to a second aspect of the invention, the catalyst comprising the three components (a), (b), and (c) is combined with at least one carrier selected from titania, gamma-alumina, and silica-alumina. According to a third aspect of the invention, the catalyst comprising the foregoing three components (a), (b), and (c) further comprises (d) at least one component selected from the group consisting of metallic platinum, metallic palladium, metallic rhodium, platinum compounds, palladium compounds, and rhodium compounds, the catalyst being in combination with or without a carrier selected from titania, gamma-alumina, and silica-alumina.

When supported on a particulate trap in the form of a ceramic foam or honeycomb structure, the catalyst allows particulates trapped or accumulated on the trap to be efficiently burned at a given exhaust gas temperature. Therefore, by supplying the catalyst onto a particulate trap, the particulate trap which is free of clogging and requires no regeneration procedure may be obtained as long as proper conditions are met. Even when clogging occurs, the frequency thereof is minimized. Less frequent clogging results in less frequent regeneration wherein accumulated particulates are removed through combustion by heating with a burner or an electric heater, or by intentionally quickly raising the exhaust gas temperature, minimizing thermal shock to the trap and protecting the trap from failure for a long period of time.

The catalysts comprising the three components (a), (b), and (c) have the advantages of heat resistance and durability. For example, the catalysts are not deactivated and retain their catalytic activity when the trap temperature rises up to 900°C with the storage of heat of combustion of particulates. Of course, repeated regeneration procedures have little influence on the activity of the catalysts.

Another advantage of the catalysts is that the oxygen concentration of exhaust gases has a minimal influence on the combustion of particulates. More specifically, the exhaust gas oxygen concentration is generally low, and is often as low as 5% vol. or below. In such a case, the combustion of particulates requires a higher temperature than in oxygen rich conditions. Nevertheless, the catalysts comprising the three components (a), (b), and (c) can keep the particulate combustion temperature relatively low even at a reduced oxygen concentration.

The catalysts comprising the three components (a), (b), and (c) are also advantageous in that harmful gas such as hydrocarbons, carbon monoxide and nitrogen oxides in exhaust gases can be catalytically reduced in amount in addition that particulates are fully burned.

Since the catalysts comprising the three components (a), (b), and (c) use base metals, they are less costly with a full supply of such catalyst components.

The above and other objects, features and advantages of this invention will be more fully understood from the following description.

Description of the preferred embodiments

The components constituting the catalysts for the use according to the invention will be described in detail. Component (a) used herein is one or more selected from metallic copper and copper chlorides, nitrates and oxides of copper.

Component (b) is at least one compound selected from metallic molybdenum, metallic vanadium, and ammonium salts, chlorides and oxides of molybdenum and vanadium. More detailedly, examples of the molybdenum compounds include molybdenum trioxide, ammonium molybdate, molybdenum chloride, etc. Examples of the vanadium compounds include ammonium vanadate, vanadyl dichloride, vanadium oxytrichloride, vanadium pentoxide, vanadium trioxide, vanadium dichloride, vanadium trichloride, vanadium tetrachloride.

Component (c) is an alkali metal compound. More specifically, component (c) is at least one selected from compounds of lithium, sodium, potassium, rubidium and cesium. Various types of compounds may be used including oxides, nitrates, halides, carboxylates, sulfites, nitrates and phosphates, with chlorides and nitrates being most preferred. Among the alkali metals, potassium, sodium and lithium are preferred, and chlorides thereof are most preferred. Potassium chloride is the best.

Also included are so-called double salts containing at least two metals of components (a), (b), and (c).

The catalysts comprising components (a), (b), and (c) may be prepared in any desired manner, for example, by mixing aqueous solutions of components (a), (b), and (c) in a suitable proportion and applying the mixed solution to a trap. Alternatively, solutions of the respective components in water or organic solvents such as alcohol may be, separately or in admixture of two, applied to a trap in sequence. Thermal spraying method is also applicable when the metallic components of (a) and/or (b) are used.

It has been found that the activity of the catalyst for the use according to the invention is enhanced by further combining it with at least one carrier selected from titania, gamma-alumina, and silica-alumina, with titania being most preferred. The combination of the catalyst with these carriers results in an additional great advantage that the catalyst is further improved in heat resistance because, according to the inventors' assumption, the respective components of the catalyst are spread over the surface of the carrier, that is titania, gamma-alumina or silica-alumina, to form an active steady catalyst surface. These carriers

may be used in admixture with the components of the catalyst. Alternatively, a trap may be pre-coated over its surface with any of these carriers before the components (a), (b), and (c) are simultaneously or separately applied to the trap. The carriers may further include those which form a double salt with one or more metals of components (a), (b), and (c), for example, potassium titanate and sodium titanate. In this case, the catalyst metal contained in the carrier may be eliminated from the catalyst.

According to the present invention, catalysts comprising components (a), (b), and (c) with or without a titania, gamma-alumina or silica-alumina carrier may be further enhanced in activity when they are combined with at least one component (d) selected from the group consisting of metallic platinum, metallic palladium, metallic rhodium, platinum compounds, palladium compounds, and rhodium compounds. The compounds used as component (d) include oxides, halides, nitrates, carboxylates, phosphates, and other double salts, with halides being preferred. Component (d) may be incorporated into the catalyst in any desired manner, for example, by applying it to a trap on which the components (a), (b), and (c) have been supported together with or without a carrier of titania or the like. Alternatively, component (d) may be applied to a trap in the same manner and at the same time as components (a), (b), and (c), that is, separately or in admixture with any component.

Component (d) is effective particularly when fuel or certain hydrocarbons are intentionally admitted into exhaust gases, or the engine is controlled such that hydrocarbons or carbon monoxide is entrained in the exhaust gases, because the catalyst containing component (d) allows such additives or contaminants to be burned at a further lower temperature and promotes the simultaneous combustion of particulates. The catalyst is also effective in removing harmful substances such as hydrocarbons and carbon monoxide in exhaust gases.

The above-mentioned catalyst components (a), (b), (c) and (d), and the carriers may be supported on a trap in an amount of 0.01 to 30% by weight, preferably 0.1 to 20% by weight of the trap, respectively.

The catalysts for the use according to the invention may be attached to a trap by a non-limiting method, usually by immersing the trap in a solution of the catalyst or each component thereof, drying the immersed trap, and calcining the trap at a given temperature of 100°C to 900°C.

The trap used herein may be selected from ceramic foams, ceramic honeycombs, ceramic fibers, ceramic particles, metal mesh, and the like. Among these, ceramic foams are preferred because of ease of attachment of the catalyst thereto and elimination of clogging. In general, those ceramic foams having 6 to 150 open cells per linear inch (1 in=$2.54\times10^{-2}$ m) and a bulk specific gravity of 0.2 to 1.0 are preferred, though not limited thereto.

One ceramic foam of desired size may suffice the purpose though a plurality of ceramic foams may be used in proper combination. For example, a plurality of ceramic foams may be arranged in series from the coarsest foam (having the largest interconnected cells) to the densest foam (having the smallest interconnected cells) in a side-by-side relationship. Of course, the method of attaching the catalyst to the trap may be varied with particular requirements. The catalysts for the use according to the invention may advantageously be combined with any well-known catalyst.

The trap or cleaner on which the catalyst of the invention is supported is placed in a flow path of exhaust gases from an engine or other source such that the exhaust gases will pass through flow channels in the trap where particulates contained therein are effectively trapped or collected by the trap. The trapped particulates are completely burned at a temperature lower by 200°C to 300°C than in the absence of the catalyst of the invention.

The use of the invention may be applied to the removal of particulates in emissions from engines of transport vehicles such as ships and trains, agricultural machines such as combines, industrial engines, combustion furnaces and boilers as well as emissions from automobile engines.

In order to further illustrate the present invention, examples thereof will be shown together with comparative examples. However, the present invention is not limited to the below-mentioned examples.

Example 1 and Comparative Examples 1—3

A mixture of 1.5 mmol of copper chloride and 1.5 mmol of potassium chloride was dissolved in distilled water in a 10-ml beaker, a separately prepared solution of 0.73 mmol of ammonium molybdate in water was added to the solution, and 0.5 g of titania was added to the mixed solution. With stirring, the slurry was evaporated to dryness on a hot plate over a period of about 10 minutes. The resulting mass was dried for a further 120 minutes in a vacuum dryer at 200°C, and then calcined for 30 minutes in an electric furnace at 700°C. Another sample was prepared by repeating the same procedure as above except that it was calcined at 900°C. Each of the catalyst samples was mixed with particulates previously collected from Diesel engine emissions at a weight ratio of 1:1. The combustion temperature of Diesel engine emission particulates was measured by a thermogravimetric analyzer at an air feed rate of 0.5 liters/min and a temperature rise rate of 20°C/min. An intermediate combustion temperature, Tm (°C) was determined on the basis of the resulting thermogravimetric diagram. (It was separately affirmed that the Tm value is one measure for the evaluation of complete combustion of particulates).

For the sake of comparison, using a binary system of copper chloride combined with potassium chloride, a single system of ammonium molybdate, and another single system of potassium chloride (total amount of catalyst component(s) 3.72 mmol and titania 0.5 g in either case), catalyst samples were

similarly prepared. The particulate combustion temperature Tm was measured for each catalyst sample. The results are shown in Table 1.

TABLE 1

| | Catalyst system | Tm (700°C calcination) | Tm (900°C calcination) |
|---|---|---|---|
| Example 1 | Cu—K—Mo | 347°C | 364°C |
| Comparative Example 1 | Cu—K | 331°C | 473°C |
| Comparative Example 2 | Mo | 469°C | 552°C |
| Comparative Example 3 | K | 550°C | 610°C |

As apparent from the data of Table 1, the catalysts for the use according to the present invention, irrespective of whether they are calcined at 700°C or 900°C, are effective in reducing the combustion temperature. Binary system catalysts as exemplified by Comparative Example 1 are fully active when calcined at 700°C, but are deactivated when calcined at 900°C. Single system catalysts as exemplified by Comparative Examples 2 and 3 only show less or little catalytic activity.

Examples 2—11

Catalysts were prepared from copper chloride-potassium chloride-ammonium molybdate and copper chloride-potassium chloride-ammonium vanadate systems by following the same procedure as in Example 1, and combined with titania, silica-alumina and gamma-alumina carriers, respectively. The combustion behavior of Diesel engine emission particulates was examined for each catalyst sample under the same conditions as in Example 1. These catalyst samples were also combined with cordierite and magnesia which are commonly used to make ceramic foams or honeycombs, and subjected to the same test. It is to be noted that all the catalyst samples were calcined at a temperature of 900°C. The results are shown in Table 2.

TABLE 2

| | Catalyst system | Tm (900°C calcination) |
|---|---|---|
| Example 2 | Cu—K—Mo+titania | 360°C |
| Example 3 | Cu—K—Mo+silica-alumina | 388°C |
| Example 4 | Cu—K—Mo+γ-alumina | 391°C |
| Example 5 | Cu—K—Mo+cordierite | 400°C |
| Example 6 | Cu—K—Mo+magnesia | 436°C |
| Example 7 | Cu—K—V+titania | 376°C |
| Example 8 | Cu—K—V+silica-alumina | 399°C |
| Example 9 | Cu—K—V+γ-alumina | 395°C |
| Example 10 | Cu—K—V+cordierite | 440°C |
| Example 11 | Cu—K—V+magnesia | 443°C |

As seen from Table 2, catalyst systems according to the present invention based on three-component catalysts combined with titania, silica-alumina, and gamma-alumina carriers afford significant effect.

Examples 12—15

Three-component catalysts combined with titania (0.5 g) were prepared by the same procedure as in Example 1 except that copper nitrate, ammonium vanadate or ammonium molybdate, and lithium chloride or sodium chloride were used as the catalyst components, and then subjected to the same particulate combustion test as in Example 1. It is to be noted that all the catalyst samples were calcined at a temperature of 700°C for 30 minutes. The molar ratios of the catalyst components used and the results of the intermediate combustion temperature Tm of the catalyst systems are shown in Table 3.

TABLE 3

| | Catalyst components (molar ratios) | Tm (700°C calci-nation) |
|---|---|---|
| Example 12 | Cu:Mo:Li=2:2:6 | 405°C |
| Example 13 | Cu:V:Li=4:2:4 | 379°C |
| Example 14 | Cu:Mo:Na=2:2:6 | 410°C |
| Example 15 | Cu:V:Na=4:2:4 | 390°C |

As also seen from Table 3, it is evident that the particulate combustion temperature is substantially reduced by catalyst systems for the use according to the present invention.

Example 16

A ceramic foam in the form of a 9.5-cm diameter, 10-cm long cylinder made of cordierite and having about 20 interconnected cells per linear inch (1 in=$2.54\times10^{-2}$ m) was immersed in an aqueous solution containing 15% by weight of ammonium vanadate, lithium chloride and copper nitrate (molar ratio 2:6:2). The ceramic foam was taken out of the solution, centrifuged to remove excess solution, dried, and calcined in air at 700°C for 30 minutes.

The catalyzed ceramic foam was placed in an exhaust pipe at a distance of 1.5 meters from the exhaust port of a Diesel engine which was operated for 30 minutes at 900 r.p.m. and a torque of 8.9 kg-m. There were trapped 3.5 g of Diesel particulates. A cubic piece of about 2×2×2 cm was cut out of the central portion of the ceramic foam, and the particulate combustion temperature was measured to be 376°C by a thermogravimetric analyzer.

For the sake of comparison, a similar experiment was conducted on a non-catalyzed ceramic foam to find a particulate combustion temperature of 650°C.

It is evident that the vanadium-lithium-copper catalyst supported on a ceramic also has a great effect in reducing Diesel particulate combustion temperature.

Example 17 and Comparative Example 4

Catalysts were prepared and the combustion behavior of Diesel engine emission particulates was examined by following the procedures of Example 1 except that the catalyst components used were 1.5 mmol of copper chloride, 0.73 mmol of ammonium molybdate, and 0.5 g of potassium titanate. For the sake of comparison, a similar experiment was carried out using the identical amounts of copper chloride and ammonium molybdate and 0.5 g of titania. The results are shown in Table 4.

TABLE 4

| | Catalyst component | Tm (700°C calci-nation) |
|---|---|---|
| Example 17 | $CuCl_2$—$(NH_4)_6Mo_7O_{24}$—$K_2O \cdot TiO_2$ | 369°C |
| Comparative Example 4 | $CuCl_2$—$(NH_4)_6Mo_7O_{24}$—$TiO_2$ | 452°C |

As seen from Table 4, the catalyst of Example 17 having potassium titanate incorporated shows catalytic activity comparable to that of the catalyst of Example 2 having KCl and titania incorporated. On the other hand, the alkali metal-free catalyst of Comparative Example 4 shows reduced catalytic activity.

Example 18

A ceramic foam in the form of a 9.5-cm diameter, 10-cm long cylinder made of cordierite and having about 30 interconnected cells per linear inch (1 in=$2.54\times10^{-2}$ m) was immersed in a slurry of titania, centrifuged to remove excess slurry, air dried, and calcined for 5 hours at a temperature of 500°C, resulting in a titania-coated ceramic foam. The amount of titania supported on the foam was 5% by weight of the total weight of the coated ceramic foam. A catalyst consisting of copper chloride, ammonium molydate and potassium chloride was applied to the coated ceramic foam, which was dried and then calcined for 30 minutes at 500°C. The molar ratio of Cu:Mo:K was 4:2:4.

The catalyzed ceramic foam was placed in an exhaust pipe at a distance of 1.5 meters from the exhaust port of a 1.8-liter Diesel engine which was operated at 3000 r.p.m. under a 67% load. The foam was exposed to the exhaust gases having a temperature of 460°C and an oxygen concentration of 6.8%.

A similar experiment was repeated on a catalyst-free ceramic foam of the same configuration as a control.

It was found that the catalyst-free system experienced back pressure increases of 50 mmHg and 90 mmHg relative to the initial value after 30 minutes and 60 minutes runs, whereas the catalyzed system according to the present invention experienced back pressure increases of 25 mmHg and 35 mmHg after the same runs, indicating a slowdown in back pressure rise. It was proved that the catalyzed system for the use according to the present invention allows particulates to be burned in the ceramic foam to prevent the rise of the back pressure.

Example 19

By following the procedure of Example 18, a ceramic foam having a Cu—Mo—K catalyst supported thereon was prepared. The catalyzed ceramic foam and a catalyst-free ceramic foam were examined for the dependency of particulate combustion behavior on oxygen concentration. Each trap was placed in an exhaust pipe from a 1.8-liter Diesel engine which was operated under high soot emission conditions, that is, at 1,500 r.p.m. under a 80% load. The trap having a known amount of particulates deposited thereon was connected to a hot air generator to examine the combustion of particulates at oxygen concentrations of 20 vol.% and 5 vol.%. It was found that the catalyst-free system showed initial and final combustion temperatures of 490°C and 620°C at an oxygen concentration of 20%, and both the initial and final combustion temperatures were increased to 520°C and 700°C at an oxygen concentration of 5%. On the contrary, the catalyzed system shows initial/final combustion temperatures of 300°C/440°C and 320°C/460°C at oxygen concentrations of 20 vol.% and 5 vol.%, respectively, and hence, shows no significant difference in combustion temperature between higher and lower oxygen concentrations, affording steady combustion behavior at a relatively low temperature.

Example 20

By following the procedure of Example 18, a ceramic foam having a Cu—Mo—K catalyst supported thereon was prepared. The catalyzed ceramic foam and a catalyst-free ceramic foam were examined for particulate combustion behavior to measure the concentration of carbon monoxide in the resulting combustion gas. Each trap was connected to a 1.8-liter Diesel engine which was operated under high soot emission conditions, that is, at 1,500 r.p.m. under a 80% load, to thereby deposit particulates on the trap. Hot air at 490°C was passed through the trap having particulates deposited thereon, and the concentration of carbon monoxide in the gas emerging from the trap was measured by gas chromatography. The percentage of $CO/(CO+CO_2)$ was 47 vol.% for the catalyst-free trap, but was reduced to 16 vol.% for the catalyzed trap.

Example 21

A catalyst designated "catalyst A" was prepared by substantially the same procedure as in Example 1, that is, by using copper chloride, ammonium molybdate and potassium chloride in a molar ratio of 2:1:2 together with titania. Another catalyst designated "catalyst B" was prepared by dissolving 3.72 mmol of chloroplatinic acid in distilled water, mixing the solution with 0.5 g of gamma-alumina, evaporating the slurry to dryness on a hot plate, vacuum drying the mass, and calcining the mass for 2 hours in an electric furnace at 450°C.

Catalyst A, catalyst B, and a mixture of them were mixed with soot emitted from a Diesel engine during normal mode operation, and were examined for combustion behavior. The results are shown in Table 5.

TABLE 5

| Catalyst | Tm (°C) |
|---|---|
| B; Pt system | 452 |
| A; Cu—Mo—K system | 325 |
| A+B (weight ratio 10:1) | 314 |

The additive effect due to catalyst B was recognized.

The same results were obtained by using palladium chloride or rhodium chloride instead of chloroplatinic acid.

Furthermore, it was examined how the mixture of catalyst A and catalyst B was effective in reducing CO in exhaust gas. The amounts of $CO_2$ and CO in exhaust gas at 150°C were measured by gas chromatography before and after its contact with the catalyst mixture. The ratio $CO/(CO+CO_2)$ was reduced to about 6 after the catalytic contact provided that the initial ratio was 100, indicating that the catalyst mixture had an outstanding CO reducing effect.

**Claims**

1. The use of a catalyst comprising in combination:

(a) at least one component selected from the group consisting of metallic copper and copper chloride, copper nitrate and copper oxide;

(b) at least one component selected from metallic molybdenum, metallic vanadium and ammonium salts, chlorides and oxides of molybdenum and vanadium;

(c) at least one component selected from alkali metal compounds, for removing minute carbon particles such as soot from exhaust gases by catalytic combustion.

2. The use according to claim 1, characterized in that the catalyst further comprises (d) at least one component selected from the group consisting of metallic platinum, metallic palladium, metallic rhodium, platinum compounds, palladium compounds, and rhodium compounds.

3. The use according to claim 1 or 2, characterized in that the catalyst is further combined with at least one carrier selected from titania, gamma-alumina, and silica-alumina.

4. The use according to claim 1, characterized in that component (c) comprises compounds of lithium, sodium and potassium.

**Patentansprüche**

1. Verwendung eines Katalysators, der in Kombination

(a) mindestens einen Bestandteil ausgewählt aus der Gruppe, die metallisches Kupfer und Kupferchlorid, Kupfernitrat und Kupferoxid umfaßt;

(b) mindestens einen Bestandteil ausgewählt aus metallischem Molybdän, metallischem Vanadium und Ammoniumsalzen, Chloriden und Oxiden von Molybdän und Vanadium;

(c) mindestens einen Bestandteil ausgewählt aus Alkalimetallverbindungen, enthält, zur Entfernung von feinen Kohlenstoffteilen, wie Ruß, aus Abgasen durch katalytische Verbrennung.

2. Verwendung nach Anspruch 1, dadurch gekennzeichnet, daß der Katalysator zusätzlich (d) mindestens eine Bestandteil ausgewählt aus der Gruppe, die metallisches Platin, metallisches Palladium, metallisches Rhodium, Platinverbindungen, Palladiumverbindungen und Rhodiumverbindungen umfaßt, enthält.

3. Verwendung nach Anspruch 1 oder 2, dadurch gekennzeichnet, daß der Katalysator zusätzlich mit mindestens einem Träger ausgewählt aus Titandioxid, γ-Aluminiumoxid und Siliciumdioxid-Aluminiumoxid kombiniert ist.

4. Verwendung nach Anspruch 1, dadurch gekennzeichnet, daß der Bestandteil (c) Verbindungen von Lithium, Natrium und Kalium umfaßt.

**Revendications**

1. Utilisation d'un catalyseur comprenant en combinaison:

(a) au moins un composant choisi parmi le cuivre métallique et le chlorure de cuivre, le nitrate de cuivre et l'oxyde de cuivre;

(b) au moins un composant choisi parmi le molybdène métallique, le vanadium métallique et les sels d'ammonium, les chlorures et les oxydes de molybdène et de vanadium;

(c) au moins un composant choisi parmi les composés de métaux alcalins, pour éliminer les petites particules de carbone, telles que la suie, des gaz d'échappement, par combustion catalytique.

2. Utilisation selon la revendication 1 caractérisée en ce que le catalyseur comprend de plus (d) au moins un composant choisi parmi le platine métallique, le palladium métallique, le rhodium métallique, les composés du platine, les composés du palladium et les composés du rhodium.

3. Utilisation selon la revendication 1 ou 2 caractérisée en ce que le catalyseur est de plus combiné avec au moins un support choisi parmi le bioxyde de titane, la γ-alumine et la silice-alumine.

4. Utilisation selon la revendication 1 caractérisée en ce que le composant (c) comprend des composés du lithium, du sodium et du potassium.